Europäisches Patentamt

European Patent Office

Office européen des brevets

(11) Publication number: **0 677 952 A2**

# EUROPEAN PATENT APPLICATION

(21) Application number: **94118211.5**

(22) Date of filing: **18.11.94**

(51) Int. Cl.⁶: **H04N 5/21**

(30) Priority: **12.04.94 KR 9407621**

(43) Date of publication of application:
**18.10.95 Bulletin 95/42**

(84) Designated Contracting States:
**DE FR GB IT**

(71) Applicant: **GOLDSTAR CO. Ltd.**
**20, Yoido-dong,**
**Youngdungpo-ku**
**Seoul (KR)**

(72) Inventor: **Kim, Myung Soo, Hyundae Mansion**
**104-103**
**254-301, Shinlim 9-dong,**
**Kwanak-ku**
**Seoul (KR)**

(74) Representative: **Lehn, Werner, Dipl.-Ing. et al**
**Hoffmann, Eitle & Partner,**
**Patentanwälte,**
**Arabellastrasse 4**
**D-81925 München (DE)**

(54) **Channel equalizer for a digital high-definition television receiver.**

(57) This invention relates to a channel equalization system of a VSB transmission system for a HDTV which can correct phase errors by using composite filters as well as by using general data even in a period having no training sequence.

The channel equalizer for a HDTV includes, a composite filter part (10) for making the input signal applied from outside produced as I signal and Q signal, filtering the I signal and the Q signal according to composite filter coefficients, and transmitting the filtered I and Q signals as a first, and a second output signals respectively, and a composite filter renewing part (20) for calculating an error for training sequence and an error for general data using synchronization signal received from outside, the first output signal and the second output signal received from the composite filter part, and calculating real composite filter coefficients and an imaginary composite filter coefficients based on the errors for the I signal and the Q signal produced at the composite filter part and training sequence and the error for general data and transmitting the calculated errors to the composite filter part. Accordingly, this invention can improve the converging speed of a VSB transmission system by correcting phase errors using composite filters as well as by carrying out channel equalization using general data even in a period having no training sequence.

**FIG.3**

FIELD OF THE INVENTION

This invention relates to a HDTV, more particularly to a channel equalizer of a HDTV, which can carry out correction of error and channel equalization on the same time in a vestigial side band transmission system.

BACKGROUND OF THE INVENTION

The Grand-Alliance vestigial side band(VSB) digital transmission system has a transmitter for receiving data input, converting the received data input to suite a transmission format, and transmitting the converted data input through a transmission channel, and a receiver for converting the data received from the transmitter through a transmission channel to suite a reception format and transmitting the converted data.

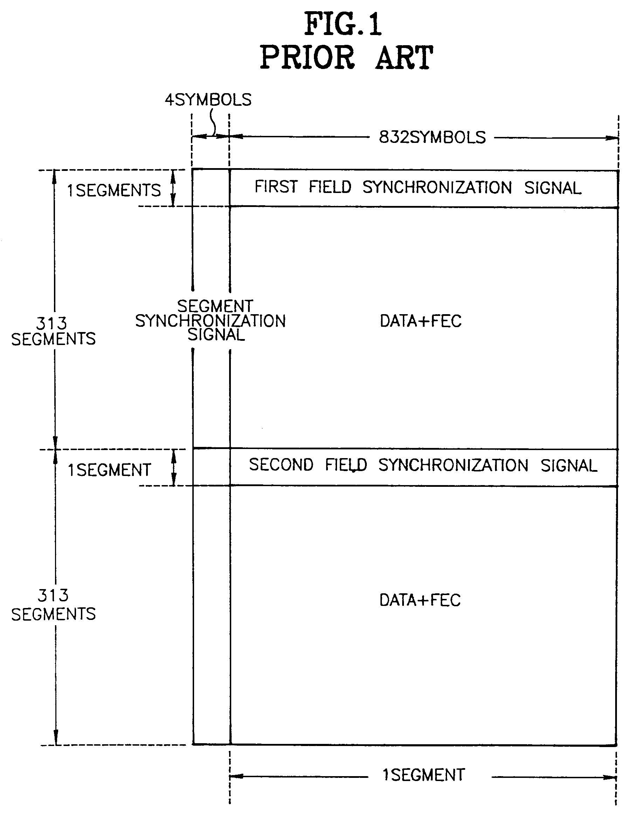

Shown in FIG.1 is a data frame of a VSB transmission system.

The VSB system transmits data according to the data frame shown in FIG.1.

A frame has segments each having 836 symbols, and each of the segments has four symbols of segment synchronization signal, and 832 symbols of data and FEC(Forward Error Correction) signal.

Each data frame has 313 segments having one data field synchronization segment containing training sequence and 312 general data segments.

The training sequence signal is a signal contained in the field synchronization signal transmitted from the transmitter to the receiver for correcting errors caused when the data is transmitted through a transmission channel at the receiver, of which the training sequence signals in odd fields are identical and the training sequence signals in even fields are inverted signals of the training sequence signals in the odd fields.

The channel equalizer is a system element used in the receiver for compensation of linear channel distortion, such as tilt and ghost caused in defective system elements included in a transmission channel or a receiver.

Channel equalization is a theory that embodies a filter opposite to the transmission characteristic of a channel for reducing channel distortion caused during transmission, wherein the most important question is how to calculate the filter coefficient.

For example, when data of 'I' is transmitted from a VSB transmission system, in case the characteristic function of the transmission channel is 'f', the receiver receives a signal of 'I•f'.

The channel equalizer in the receiver, providing an inverted function of $f^{-1}$ an inversion of the characteristic function of the transmission channel to makes the input signal become $I•f•f^{-1} = I$ once it has passed the channel equalizer, serves the input signal to be restored to the original input signal.

Thus, the channel equalizer, obtaining an inverted function an inversion of the characteristic function of the transmission channel, serves a signal transmitted through a transmission channel to be restored to an original signal having no distortion.

The filter coefficient of the channel equalizer can be obtained with LMS(Least Mean Square) algorithm.

This LMS algorithm can be expressed in following equation.

$$C_{k+1} = C_k + \Delta( I_{Tk} - I_{Tk})I^*_{in} \text{ equation} \qquad (1),$$

wherein, $C_{k+1}$ is a filter coefficient required to obtain at the present time, $C_k$ is a filter coefficient obtained previously, $I_{Tk}$ is a training sequence signal already decided at the transmitter, $I_{Tk}$ is a training sequence signal of a channel equalizer output, containing errors due to transmission through a transmission channel, and $I^*_{in}$ is input signal of the channel equalizer.

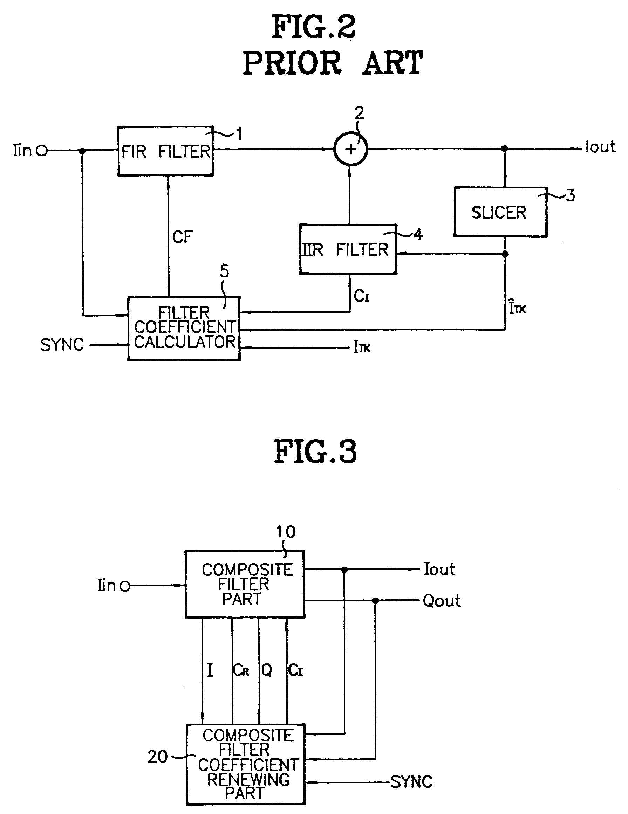

Shown in FIG.2 is a block diagram of a channel equalizer.

As shown in FIG. 2, the conventional channel equalizer includes a finite impulse response filter-(hereinafter called 'FIR filter') 1 for receiving input signal $I_{in}$ and filter coefficient F, a slicer for converting the input signal into a signal having a predetermined transmission level, a filter coefficient calculator 5 for receiving a synchronization signal sync, the training sequence signal applied from outside(i.e., applied from the receiver) $I_{Tk}$, and the training sequence signal having converted into a signal having a predetermined transmission level $I_{Tk}$ through the slicer 3, and generating filter coefficients $C_F$ and $C_I$ based on the received signals, a infinite impulse response filter(hereinafter called 'IIR filter') 4 for receiving the filter coefficient C1 transmitted from the filter coefficient calculator 5 and the training sequence signal converted into a signal having a predetermined transmission level $I_{Tk}$ through the slicer 3, and an adder 2 for receiving signals from the FIR filter 1 and the IIR filter 4, adding the two signals and transmitting the added signal as an output signal $I_{out}$ of the equalizer.

As has been explained, the conventional equalizer has two filters of FIR filter 1 and IIR filter 4, wherein the FIR filter 1 carries out filtering of the input signal $I_{in}$ utilizing the filter coefficient F applied from the filter coefficient calculator 5, and the IIR filter 4 carries out filtering of the training sequence signal converted into a signal having a predetermined transmission level $I_{Tk}$ through the slicer 3 utilizing the filter coefficient I applied from the filter coefficient calculator 5.

Therefore, the adder 2 adds the signals received from the FIR filter 1 and the IIR filter 4 and transmits the result of the addition as the output signal of the channel equalizer $I_{out}$.

In this instant, the reason that the signal received from the adder 2 $I_{out}$ is filtered not by directly applying the received signal to the IIR filter 4, but by applying the received signal fed back after converted into a signal having a predetermined transmission level through the slicer 3 to the IIR filter 4 is because the channel equalizer can not converge but diverge the signal in case channel equalization is carried out by applying the training sequence signal containing many errors to the channel equalizer as it is due to the characteristics of IIR filter.

The filter coefficient calculator 5 carries out the filter coefficient calculation using the input signal $I_{in}$, the training sequence signal applied from outside $I_{Tk}$, the training sequence signal converted into a signal having a predetermined transmission level $I_{Tk}$ through the slicer 3, and the synchronization signal sync.

The training sequence signal $I_{Tk}$ and the synchronization signal sync are signals applied from outside, of which the synchronization signal sync indicates position of the received training sequence signal $I_{Tk}$.

Since the training sequence signal $I_{Tk}$ is a value already determined at the transmitter, it always has a certain value, whereas the training sequence signal converted into a signal having a predetermined transmission level $I_{Tk}$ through the slicer 3 varies depending on the error value.

Therefore, the filter coefficient calculator 5 calculates error value($I_{Tk}$ - $I_{Tk}$) based on the training sequence signal $I_{Tk}$ received from the slicer 3 and the training sequence signal $I_{Tk}$ applied from outside during the training sequence period in which the synchronization signal sync is being applied.

Accordingly, the constant $\Delta$ is multiplied to the error value ($I_{Tk}$ - $I_{Tk}$), and the input signal $I^*_{in}$ is multiplied to this multiplied value.

Upon addition of this multiplied value to the previous filter coefficient $C_k$, the filter coefficient shown in equation (1) can be obtained.

Then, the FIR filter 1 and the IIR 4 filter can carry out channel equalization using the filter coefficients $C_F$ and $C_I$ received from the filter coefficient calculator 5.

However, the conventional channel equalizer, is only operable during a training sequence period, has problems in that the channel equalizer has significantly low converging speed, accordingly making the error correction speed slow, and can not correct the phase errors contained in the transmission signals because the channel equalizer carries out channel equalization only using I signal, but not Q signal as the input signals.

## SUMMARY OF THE INVENTION

The object of this invention for solving the foregoing problems is to provide a channel equalizer for a HDTV, which can improve the error correction speed by carrying out channel equalization using not only the training sequence but also general input data.

And other object of this invention is to provide a channel equalizer for a HDTV, which can correct phase errors contained in the transmission error using a composite filter.

These and other objects and features of this invention can be achieved by providing a channel equalizer for a HDTV including, a composite filter part for making the input signal applied from outside produced as I signal and Q signal, filtering the I signal and the Q signal according to composite filter coefficients, and transmitting the filtered I and Q signals as a first, and a second output signals respectively, and a composite filter renewing part for calculating an error for training sequence and an error for general data using synchronization signal received from outside, the first output signal and the second output signal received from the composite filter part, and calculating real composite filter coefficients and an imaginary composite filter coefficients based on the errors for the I signal and the Q signal produced at the composite filter part and training sequence and the error for general data and transmitting the calculated errors to the composite filter part.

## BRIEF DESCRIPTION OF THE DRAWINGS

FIG.1 is a data frame of a VSB digital transmission system.
FIG.2 is a circuit diagram of a channel equalizer of a conventional VSB digital transmission system.

EP 0 677 952 A2

FIG.3 is a block diagram of a channel equalizer of a VSB digital transmission system in accordance with this invention.

FIG.4 is detail of the composite filter part of FIG. 3.

FIG.5 is a block diagram of the composite coefficient renewing part of FIG.3.

FIG.6 is detail of the first error calculator of FIG.5.

FIG.7 is detail of the second error calculator of FIG.5.

FIG.8 is detail of the error selection part of FIG.5.

FIG.9 is detail of the filter coefficient renewing part of FIG.5.

FIG.10 is one embodiment of the second mapper of the second error calculator of FIG.7.

FIG.11 is other embodiment of the second mapper of the second error calculator of FIG.7.

FIG.12 shows the method for calculating error in accordance with this invention.


DETAILED DESCRIPTION OF THE INVENTION

As shown in FIG. 3, a channel equalizer includes a composite filter part 10 and a composite filter coefficient renewing part 20.

The composite filter part 10 receives an input signal $I_{in}$ from outside and produces an I signal and a Q signal respectively based on the input signal $I_{in}$, and filters the I signal and the Q signal according to composite filter coefficients $C_R$ and $C_I$ and transmits the filtered signals as a first, and a second output signals $I_{out}$ and $Q_{out}$.

The composite filter coefficient renewing part 20 calculates errors for training sequence $E_T$ and errors for general data $E_R$ and $E_I$ using a synchronization signal sync received from outside, and the first output signal $I_{out}$ and the second output signal $Q_{out}$ received from the composite filter part 10, and calculates a real composite filter coefficient $C_R$ and an imaginary composite filter coefficient $C_I$ based on the I signal and the Q signal produced at the composite filter part 10 and errors for training sequence $E_T$ and errors for general data $E_R$ and $E_I$ and transmits the calculated real composite filter coefficient $C_R$ and an imaginary composite filter coefficient $C_I$ to the composite filter part 10.

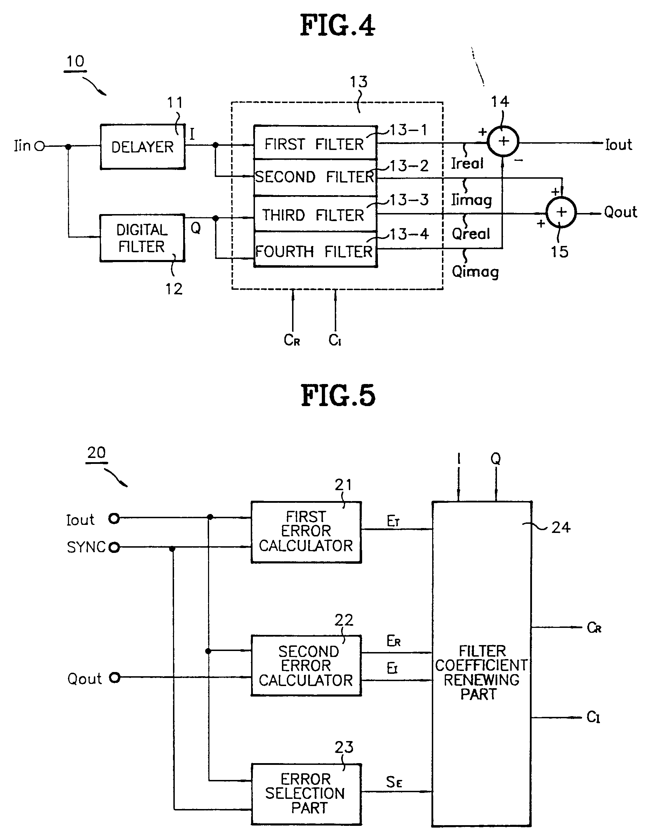

As shown in FIG.4, the composite filter part 10 includes a delayer 11 for delaying the input signal $I_{in}$ received from outside and transmitting the delayed signal as an I signal, a digital filter 12 for digital filtration of the input signal $I_{in}$ received from outside and transmitting the filtered signal as a Q signal, a filter group 13 for filtering the I signal and the Q signal received from the delayer 11 and the digital filter 12 using the composite filter coefficients $C_R$ and $C_I$ received from the composite filter coefficient renewing part 20 respectively and transmitting the filtered signals as a real I signal $I_{real}$, an imaginary I signal $I_{imag}$, a real Q signal $Q_{real}$, and an imaginary Q signal $Q_{imag}$, a subtracter 14 for calculating the difference of the real I signal $I_{real}$ and the imaginary Q signal $Q_{imag}$ received from the filter group 13 and transmitting the calculated difference as a first output signal $I_{out}$, and an adder 15 for adding the imaginary I signal $I_{imag}$ and the real Q signal $Q_{real}$ received from the filter group 13 and transmitting the added signal as a second output signal $Q_{out}$.

The filter group 13 includes a first filter 13-1 for transmitting real I signal $I_{real}$ by filtering the I signal received from the delayer 11 according to the real composite filter coefficient $C_R$ received from the composite filter renewing part 20, a second filter 13-2 for transmitting imaginary I signal $I_{imag}$ by filtering the I signal received from the delayer 11 according to the imaginary composite filter coefficient $C_I$ received from the composite filter renewing part 20, a third filter 13-3 for transmitting real Q signal $Q_{real}$ by filtering the Q signal received from the digital filter 12 according to the real composite filter coefficient $C_R$ received from the composite filter renewing part 20, and a fourth filter 13-4 for transmitting imaginary Q signal $Q_{imag}$ by filtering the Q signal received from the digital filter 12 according to the imaginary composite filter coefficient $C_I$ received from the composite filter renewing part 20.

As shown in FIG.5, the composite filter coefficient renewing part 20 includes a first error calculator 21 for calculating an error of training sequence $E_T$ using the synchronization signal sync applied from outside and the first output signal $I_{out}$ received from the composite filter part 10, a second error calculator 22 for calculating errors $E_R$ and $E_I$ using the first and the second output signals $I_{out}$ and $Q_{out}$ received from the composite filter part 10, an error selection part 23 generating selection signal SE for selecting an error of training sequence $E_T$ while in training sequence period and errors of general data $E_R$ and $E_I$ while not in training sequence period using the synchronization signal sync applied from outside and the first output signal $I_{out}$ received from the composite filter part 10, and a filter coefficient renewing part 24 for selecting either one of the error of the training sequence $E_T$ and errors of general data $E_R$ and $E_I$ received from the first and the second error calculators 21 and 22 according to the selection signal SE received from the error selection part 23 and calculating the real composite filter coefficient $C_R$ and the imaginary composite filter

4

coefficient $C_I$ using the selected errors $E_T$, $E_R$, and $E_I$ and the I signal and the Q signal produced at the composite filter part 10.

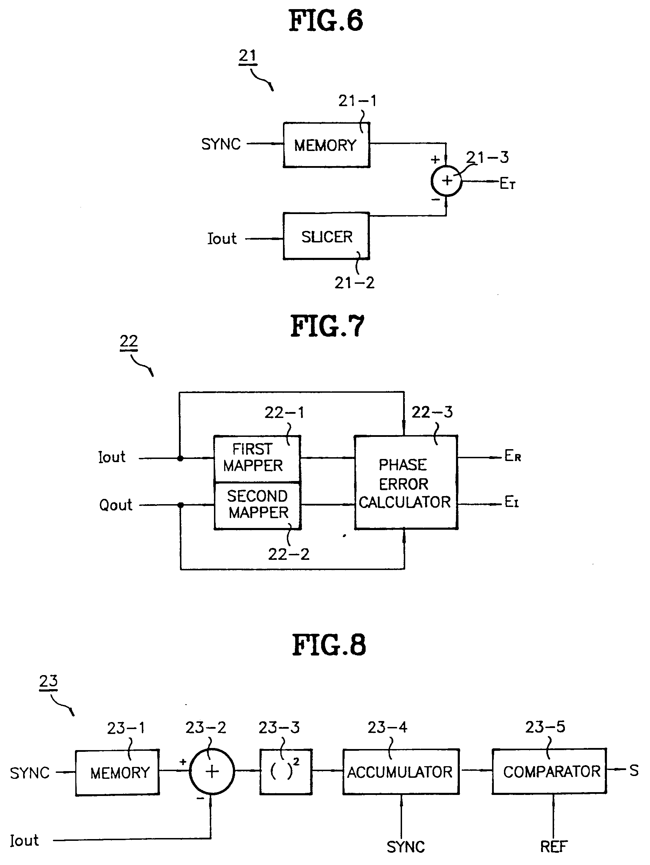

As shown in FIG.6, the first error calculator 21 for calculating the error $E_T$ for training sequence during training sequence period includes a memory 12-1 for storing predetermined training sequence signal $I_{TK}$ in advance and transmitting corresponding training sequence signal according to the synchronization signal sync applied from outside, and a slicer 21-2 for converting the level of the first output signal $I_{out}$ received from the composite filter part 10 to a signal having a transmission level, and a subtracter 21-3 for calculating the difference of the training sequence signal received from the memory 21-1 and the first output signal having the level converted into transmission level through the slicer 21-2 and transmitting the calculated difference as an error of training sequence $E_T$.

As shown in FIG.7, the second error calculator 22 for calculating errors $E_R$ and $E_I$ for general data during while not in training sequence period includes a first mapper 22-1 for generating an error of first output signal $I_{out}$ received from the composite filter part 10, a second mapper 22-2 for generating error of second output signal $Q_{out}$ received from the composite filter part 10, and a phase error calculator 22-3 for calculating errors of general data $E_R$ and $E_I$ based on the signals received from the first and the second mappers 22-1 and 22-2 and the first and the second output signals $I_{out}$ and $Q_{out}$ received from the composite filter part 10.

Herein, each of the first mapper and the second mapper 22-1 and 22-2 has PROM.

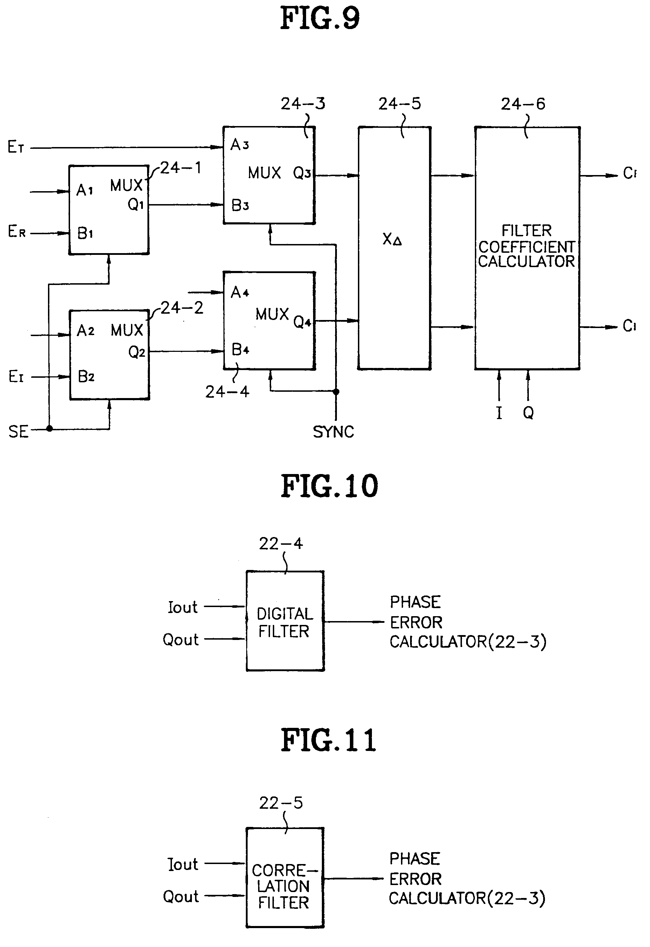

Herein, the second mapper 22-1 can be replaced with a digital filter 22-4 shown in FIG.10 that inverts the phase of the first output signal $I_{out}$ received from the composite filter part 10 at 90 deg. and compare to the second output signal $Q_{out}$ received from the composite filter part 10.

And the second mapper 22-1 can be replaced with a correlating filter 22-5 shown in FIG.11 that receives the first and the second output signals $I_{out}$ and $Q_{out}$ from the composite filter part 10 and obtains the correlation of the signals.

As shown in FIG.8, the error selection part 23 includes a memory 23-1 for storing predetermined training sequence signals in advance and transmitting corresponding training sequence signal according to the synchronization signal applied from outside, a subtracter 23-2 for calculating the difference of the training sequence signal received from the memory 23-1 and the first output signal $I_{out}$ received from the composite filter part 10, an average value calculator 23-3 for calculating an average value of the signals received from the subtracter 23-2, an accumulator 23-4 for accumulating the average values received from the average value calculator 23-3 according to the synchronization signal sync applied from outside, and a comparator 23-5 for generating a selection signal SE that compares the accumulated average received from the accumulator 23-4 to a preset reference value Ref and make to select the channel equalization using training sequence if the accumulated average is greater than the reference value Ref and to select the channel equalization using general data if the accumulated average is smaller than the reference value Ref.

As shown in FIG. 9, the filter coefficient renewing part 24 includes a first multiplexer 24-1 for receiving the real error $E_R$ and '0' of the errors of general data $E_R$ and $E_I$ applied from the second error calculator 22, selecting '0' while in training sequence period and selecting real error $E_R$ while not in training sequence period according to the selection signal SE received from the error selection part 23, and transmitting the selected signal, a second multiplexer 24-2 for receiving imaginary error $E_I$ and '0' of the errors of general data $E_R$ and $E_I$ applied from the second error calculator 22, selecting '0' while in training sequence period and selecting imaginary error $E_I$ while not in training sequence period according to the selection signal SE received from the error selection part 23, and transmitting the selected signal, a third multiplexer 24-3 for receiving error of training sequence $E_T$ applied from the first error calculator 21 and signal applied from the first multiplexer 24-1, selecting error of training sequence $E_T$ while in training sequence period and selecting the signal applied from the first multiplexer 24-1 while not in training sequence period according to the synchronization signal sync received from outside, and transmitting the selected signal, a fourth multiplexer 24-4 for receiving the signal applied from the second multiplexer 24-2 and '0', selecting '0' while in training sequence period and selecting the signal applied from the second multiplexer 24-2 while not in training sequence period according to the synchronization signal sync received from outside, and transmitting the selected signal, a multiplier 24-5 for multiplying a certain constant $\Delta$ to the signals received from the third and fourth multiplexers 24-3 and 24-4, and a filter coefficient calculator 24-6 for calculating composite filter coefficients $C_R$ and $C_I$ using the I signal and the Q signal received from the composite filter part 10 and the signal received from the multiplier 24-5.

Herein, in order to prevent the error value from converging, the certain constant $\Delta$ is set greater than '0', but smaller than '1', particularly set greater than $2_{-12}$, but smaller than $2_{-9}$ based on experiments.

Operation of the channel equalizer in accordance with this invention having the foregoing system is to be explained hereinafter.

Of the I signal and the Q signal, not only by taking the I signal as the input signal $I_{in}$, and producing the I signal and the Q signal utilizing this input signal $I_{in}$, but also by using general data while no training sequence is present, the channel equalizer in accordance with this invention can carry out channel equalization.

If there is no phase error in the input signal $I_{in}$, the Q signal has no correlation with the input signal $I_{in}$, but if there is phase error developed, the input signal $I_{in}$ hascorrelation with the Q signal in proportion to the phase error.

The input signal $I_{in}$ is filtered upon being applied to the composite filter part 10, which is to be explained hereinafter in detail, referring to FIG.4.

The input signal $I_{in}$ is, come out of the digital filter 12 as a Q signal inverted of the phase at 90 deg., and delayed through the delayer 11, compensating the delay of the digital filter 12, come out of the delayer 11 as an I signal.

The I signal come out of the delayer 11 is, applied to the first and the second filters 13-1 and 13-2 of the filter group 13, filtered therein according to the composite filter coefficients $C_R$ and $C_I$ applied from the composite filter coefficient renewing part 20, and come out of the filters 13-1 and 13-2 as a real I signal $I_{real}$ and an imaginary I signal $I_{imag}$, respectively. And the Q signal come out of the digital filter 12 is, applied to the third and the fourth filters 13-3 and 13-4 of the filter group 13, filtered therein according to the composite filter coefficients $C_R$ and $C_I$ applied from the composite filter coefficient renewing part 20, and come out of the filters 13-3 and 13-4 as the real Q signal $Q_{real}$ and the imaginary Q signal $Q_{imag}$, respectively.

In this instant, the first and the third filters 13-1 and 13-2 receive the composite filter coefficient $C_R$, and the second and the fourth filters 13-2 and 13-4 receive the composite filter coefficient $C_I$.

The signals come out of the filter group $I_{real}$, $I_{imag}$, $Q_{real}$, and $Q_{imag}$ are, subtracted and added through the subtracter 14 and the adder 15, come out as the first and the second output signals $I_{out}$ and $Q_{out}$.

That is, for the subtracter 14 by generating the first output signal $I_{out}$ having the Q signal component removed from the I signal through subtracting the imaginary Q signal $Q_{imag}$ from the real I signal $I_{real}$ and for the adder 15 by generating the second output signal $Q_{out}$ through adding the real Q signal $Q_{real}$ to the imaginary I signal $I_{imag}$, the channel equalizer in accordance with this invention carries out channel equalization according to the first and the second output signal $I_{out}$ and $Q_{out}$.

Method for obtaining the composite filter coefficients required for channel equalization is to be explained hereinafter, referring to FIGs.5, 6, 7, 8, and 9.

The composite filter coefficient renewing part 20 carries out calculation of composite filter coefficients $C_R$ and $C_I$ using the I signal and the Q signal received from the delayer 11 and the digital filter 12 respectively of the composite filter part 10 and the first and the second output signals $I_{out}$ and $Q_{out}$ received from the adder 15 and the subtracter 14 respectively of the composite filter part 10.

The method for obtaining the composite filter coefficients includes a first step for calculating error $E_T$ of training sequence and errors $E_R$ and $E_I$ of general data through the first error calculator 21 and the second error calculator 22 respectively, a second step for obtaining the selection signal SE that can make to select the error of training sequence while in training sequence period and to select the errors of general data while not in training sequence period through the error selection part 23, and a third step for obtaining the composite filter coefficients $C_R$ and $C_I$ through the filter coefficient renewing part 24.

First, method for obtaining error $E_T$ of training sequence is to be explained hereinafter, referring to FIG.6.

When the memory 12-1 receives the synchronization signal sync applied from outside, the memory 12-1 transmits the stored training sequence signal $I_{TK}$ of the transmitter according to the received synchronization signal sync. And the first output signal $I_{out}$ transmitted from the composite filter part 10 is, received at the slicer 21-2, converted to a signal having a predetermined transmission level therein, and transmitted therefrom as a converted first output signal $I_{TK}{}^{\wedge}$.

The training sequence signal $I_{TK}$ and the converted first output signal $I_{TK}{}^{\wedge}$ applied from the memory 21-1 and the slicer 21-2 respectively are subtracted at the subtracter 21-3, calculating the difference of the two signals $I_{TK} - I_{TK}{}^{\wedge}$, transmitted as an error of training sequence.

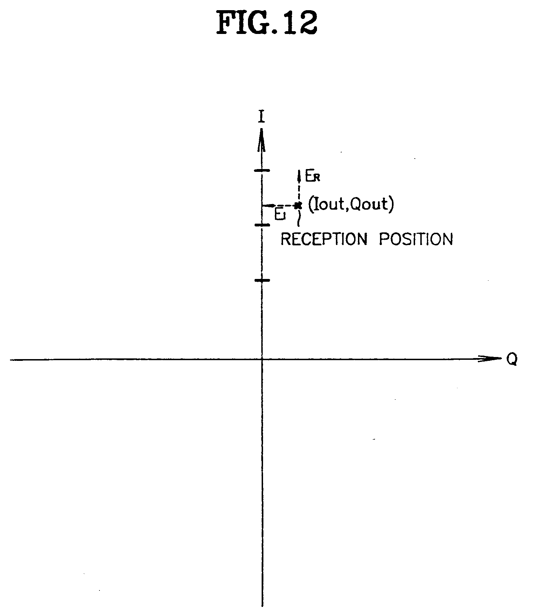

And, a method for obtaining errors $E_R$ and $E_I$ of general data is to be explained hereinafter, referring to the FIGs.7 and 12.

In case while not in training sequence period, the differences of the transmission levels of the first and the second output signals $I_{out}$ and $Q_{out}$ received from the composite filter part 10 with a reference value Ref is obtained.

For example, as shown in FIG.12, the error $E_R$ is a value subtracted of the reference level from the present reception position of the first output signal $I_{out}$ and the error $E_I$ is a value subtracted of the reference level from the present reception position of the second output signal $Q_{out}$.

The PROM, embodying the first mapper 22-1 for obtaining the error of the first output signal $I_{out}$ received from the composite filter part 10, stores the difference(error value) of the transmission level of the first output signal $I_{out}$ received from the composite filter part 10 in advance, and transmits the corresponding error value of the stored error values upon receiving the first output signal $I_{out}$ applied from the composite filter part 10.

The second mapper 22-2 for obtaining the error of the second output signal $Q_{out}$ applied from the composite filter part 10, if the second output signal $Q_{out}$ received from the composite filter part 10 is erratic, can take the data of the second mapper 22-2 determining the reference level as "0". That is, in case the second output signal $Q_{out}$ received from the composite filter part 10 is erratic, the second mapper 22-2 transmits the error of the second output signal $Q_{out}$ as "0".

Operation in case the second mapper 22-2 has been embodied of the digital filter 22-4 is to be explained hereinafter, referring to FIG.10.

In case the second mapper 22-2 has been embodied of the digital filter 22-4, the digital filter 22-4 calculates the difference of the signal inverted of phase at 90 deg. through Hilbert transformation, of the first output signal $I_{out}$ transmitted from the composite filter part 10 and the second output signal $Q_{out}$ transmitted from the composite filter part 10 and transmits the calculated difference to the error calculator 22-3.

And operation in case the second mapper 22-2 has been embodied of the correlation filter 22-5 is to be explained hereinafter, referring to FIG.11.

In case the second mapper 22-2 has been embodied of the correlation filter 22-5, the correlation of the first and second output signals $I_{out}$ and $Q_{out}$ transmitted from the composite filter part 10 is obtained at the correlation filter 22-5 and transmitted to the phase calculator 22-3.

As the result of carrying out operation of the correlation filter 22-5, if it is found that the first and second output signals $I_{out}$ and $Q_{out}$ transmitted from the composite filter part 10 have correlation, it means that it has a phase error, if not, it means that it has no phase error.

Accordingly, the phase error calculator 22-3 receives the error value obtained at the first mapper 22-1 and the first output signal $I_{out}$ applied from the composite filter part 10, multiplies them, and transmits the result of multiplication as the error $E_R$, and receives the error value obtained at the second mapper 22-2 and the second output signal $Q_{out}$ applied from the composite filter part 10, multiplies them, and transmits the result of multiplication as the error $E_I$.

Through the foregoing process, errors $E_R$ and $E_I$ for the general data can be obtained.

The filter coefficient renewing part 24 calculates the composite filter coefficients $C_R$ and $C_I$ through selecting the output signal $E_T$ of the first error calculator 21 and the output signals $E_R$ and $E_I$ of the second error calculator 22 according to the selection signal SE received from the error selection part 23, which will be explained later.

Then, operation for generating selection signal SE at the error selection part 23 is to be explained hereinafter, referring to FIG.8.

When a synchronization signal applied from outside is received, the memory 23-1 transmits the stored training sequence signal, and which training sequence signal together with the first output signal $I_{out}$ applied from the composite filter part 10 are, received at the subtracter 23-2, calculated of the difference as the error therein, which error is applied to the average value calculator 23-3, and calculated of average value therein.

The average values obtained at the average value calculator 23-3 are accumulated in the accumulator 23-4 according to the synchronization signal sync received from outside.

The accumulated average value received from the accumulator 23-4 is compared to a preset reference value Ref at the comparator 23-5 so that the comparator 23-5 generates a selection signal SE which will not select the channel equalization using general data but will select the channel equalization using training sequence if the accumulated average value is greater than the reference value Ref.

That is, if the error value for training sequence is greater, since it means that the error value for general data is greater, a channel equalization based on the training sequence is carried out, and if the error value for the training sequence is smaller, since it means that the error value for general data is smaller, a channel equalization based on general data is carried out.

Finally, operation for selecting the errors $E_T$, $E_R$ and $E_I$ obtained in the foregoing process according to the selection signal, and obtaining the composite error coefficients $C_R$ and $C_I$ based on the selected error, is to be explained hereinafter, referring to FIG.9.

When the selection signal SE for selecting a channel equalization according to training sequence is applied from the error selection part 23 to the filter coefficient renewing part 24, the multiplexers 24-1 and 24-2 thereof select '0' and '0' of the signals $(0, E_R)$ and $(0, E_I)$ applied to the two input terminals (A1,B1) and (A2,B2) thereon respectively.

Therefore, the multiplexers 24-3 and 24-4 have the '0' applied to all the one input terminals (B3,B4) thereof and the output of the first error calculation part 21 $E_T$ and '0' applied to the other input terminals (A3,A4) thereof respectively.

While in training sequence period, by selecting the signals $E_T$ and '0' received at the other input terminals (A3,A4) of the multiplexers 24-3 and 24-4 according to the synchronization signal sync received from outside and applying the selected signals to the multiplier 24-5 respectively, the signals $E_T$ and '0' are multiplied to the certain constant '$\Delta$', respectively.

The signals applied from the multiplier 24-5 to the filter coefficient calculator 24-6 is multiplied to the I signal and Q signal received from the composite filter part 10.

Thus, the filter coefficient calculator 24-6 is become to apply $\Delta E_T \times I$ and '0' as the filter coefficients $C_R$ and $C_I$ to the filter group 13 of the composite filter part 10.

When the selection signal SE for selecting a channel equalization based on general data is applied to the filter coefficient renewing part 24, the multiplexers 24-1 and 24-2 select $E_R$ and $E_I$ of the signals $0, E_R$ and $0, E_I$ applied to the two input terminals A1, B1 and A2, B2, respectively.

Therefore, at the time of channel equalization based on general data, the multiplexers 24-3 and 24-4 have the $E_R$ and $E_I$ applied at one input terminals B3 and B4 thereof respectively and the output $E_T$ and '0' of the first error calculator 21 applied at the other input terminals A3 and A4, respectively.

At the time of channel equalization based on general data, for the multiplexers 24-3 and 24-4 by selecting the signals $E_R$ and $E_I$ applied to the one input terminals B3 and B4 thereof according to the synchronization signal sync received from outside and applying the selected signals to the multiplier 24-5 respectively, the signals $E_R$ and $E_I$ are multiplied to the certain constant $\Delta$ respectively.

The signal applied from the multiplier 24-5 is, applied to the filter coefficient calculator 24-6, and multiplied to the I signal and the Q signal applied from the composite filter part 10.

Thus, the filter coefficient calculator 24-6 produces $E_R \times I$, and $\Delta E_T \times Q$ as the filter coefficients $C_R$ and $C_I$ which is applied to the filter group 13 of the composite filter part 10.

That is, the channel equalizer of this invention applies the output signals of the multiplexers 24-1 to 24-4 not directly to the filter coefficient calculator 24-6 but after being reduced as much as the certain constant '$\Delta$' through the multiplier 24-5.

Process for correcting phase error is to be explained hereinafter, using formula.

$$(I\cos\theta, Q\sin\theta) \qquad \text{equation2}$$

$$\cos\theta \quad \sin\theta \qquad \underline{\hspace{4cm}} \quad \text{equation 3}$$
$$-\sin\theta \quad \cos\theta$$

Output value of the filter group 13 is as shown in following equation 4.

$$(I\cos\theta, Q\sin\theta) \qquad \cos\theta \quad \sin\theta$$
$$-\sin\theta \quad \cos\theta$$
$$= (I\cos^2\theta - Q\sin^2\theta)/I_{out} + (I+Q)\sin\theta\cos\theta/Q_{out} \text{ -- equation 4.}$$

It can be seen from equation 4 that, $I_{out}$ being $I\cos^2\theta - Q\sin^2\theta$, the Q signal which is a phase error has been eliminated from the I signal.

As has been explained, this invention can improve the converging speed of a VSB transmission system by correcting phase errors using composite filters as well as by carrying out channel equalization using general data even in a period having no training sequence.

Although the invention has been described in conjunction with specific embodiments, it is evident that many alternatives and variations will be apparent to those skilled in the art in light of the foregoing description. Accordingly, the invention is intended to embrace all of the alternatives and variations that fall within the spirit and scope of the appended claims.

**Claims**

1. A channel equalizer for a HDTV comprising:

   a composite filter part for receiving input signal from outside and producing as I signal and Q signal based on the received input signal, filtering the I signal and the Q signal according to composite filter coefficients, and transmitting the filtered I and Q signals as a first, and a second output signals respectively; and,

   a composite filter renewing part for calculating an error for training sequence and errors for general data using synchronization signal received from outside, the first output signal and the second output signal received from the composite filter part, and calculating real composite filter coefficients and an imaginary composite filter coefficients based on the errors for the I signal and the Q signal produced at the composite filter part and training sequence and the errors for general data and transmitting the calculated errors to the composite filter part.

2. The channel equalizer for a HDTV as claimed in claim 1,
   wherein the composite filter part includes

   a delayer for delaying the input signal received from outside and transmitting the delayed signal as an I signal,

   a digital filter for digital filtration of the input signal received from outside and transmitting the filtered signal as a Q signal,

   a filter group for filtering the I signal and the Q signal received from the delayer and the digital filter using the composite filter coefficients received from the composite filter coefficient renewing part respectively and transmitting the filtered signals as a real I signal, an imaginary I signal, a real Q signal, and an imaginary Q signal,

   a subtracter for calculating the difference of the real I signal and the imaginary Q signal received from the filter group and transmitting the calculated difference as a first output signal, and

   an adder for adding the imaginary I signal and the real Q signal received from the filter group and transmitting the added signal as a second output signal.

3. The channel equalizer for a HDTV as claimed in claim 2,
   wherein the filter group includes

   a first filter for producing real I signal by filtering the I signal received from the delayer according to the real composite filter coefficient received from the composite filter renewing part,

   a second filter for producing imaginary I signal by filtering the I signal received from the delayer according to the imaginary composite filter coefficient received from the composite filter renewing part,

   a third filter for producing real Q signal by filtering the Q signal received from the digital filter according to the real composite filter coefficient received from the composite filter renewing part, and

   a fourth filter for producing imaginary Q signal by filtering the Q signal received from the digital filter according to the imaginary composite filter coefficient received from the composite filter renewing part.

4. The channel equalizer for a HDTV as claimed in claim 1,
   wherein the composite filter coefficient renewing part includes

   a first error calculator for calculating an error of training sequence using the synchronization signal received from outside and the first output signal received from the composite filter part,

   a second error calculator for calculating errors using the first and the second output signals received from the composite filter part,

   an error selection part generating selection signal for selecting an error of training sequence while in training sequence period and errors of general data while not in training sequence period using the synchronization signal received from outside and the first output signal received from the composite filter part, and

   a filter coefficient renewing part for selecting either one of the error of the training sequence and errors of general data received from the first and the second error calculators according to the selection signal received from the error selection part and calculating the real composite filter coefficient and the imaginary composite filter coefficient using the selected errors and the I signal and the Q signal produced at the composite filter part.

**5.** The channel equalizer for a HDTV as claimed in claim 4,
wherein the first error calculator includes

a memory for storing predetermined training sequence signal in advance and transmitting corresponding training sequence signal according to the synchronization signal received from outside,

a slicer for converting the level of the first output signal received from the composite filter part to a transmission level, and

a subtracter for calculating the difference of the training sequence signal received from the memory and the first output signal having the level converted into transmission level through the slicer and transmitting the calculated difference as an error of training sequence.

**6.** The channel equalizer for a HDTV as claimed in claim 4,
wherein the second error calculator includes

a first mapper for generating an error of first output signal received from the composite filter part,

a second mapper for generating error of second output signal received from the composite filter part, and

a phase error calculator for calculating errors of general data based on the signals received from the first and the second mappers and the first and the second output signals received from the composite filter part.

**7.** The channel equalizer for a HDTV as claimed in claim 6,
wherein the first mapper has PROMs.

**8.** The channel equalizer for a HDTV as claimed in claim 6,
wherein the second mapper generates the error of the second output signal as '0' in case the second output signals received form the composite filter part are erratic.

**9.** The channel equalizer for a HDTV as claimed in claim 6,
wherein the second mapper has PROMs.

**10.** The channel equalizer for a HDTV as claimed in claim 6,
wherein the second mapper has a digital filter.

**11.** The channel equalizer for a HDTV as claimed in claim 6,
wherein the second mapper has a correlation filter.

**12.** The channel equalizer for a HDTV as claimed in claim 4,
wherein the error selection part includes

a memory for storing predetermined training sequence signals in advance and transmitting corresponding training sequence signal according to the synchronization signal received from outside,

a subtracter for calculating the difference of the training sequence signal received from the memory and the first output signal received from the composite filter part,

an average value calculator for calculating an average value of the signals received from the subtracter,

an accumulator for accumulating the average values received from the average value calculator according to the synchronization signal received from outside, and

a comparator for generating a selection signal that compares the accumulated average received from the accumulator to a preset reference value and make to select the channel equalization using training sequence if the accumulated average is greater than the reference value and to select the channel equalization using general data if the accumulated average is smaller than the reference value.

**13.** The channel equalizer for a HDTV as claimed in claim 12,
wherein the memory has PROMs.

**14.** The channel equalizer for a HDTV as claimed in claim 4,
wherein the filter coefficient renewing part includes

a first multiplexer for receiving the real error and '0' of the errors of general data applied from the second error calculator, selecting '0' while in training sequence period and selecting real error while not in training sequence period according to the selection signal received from the error selection part, and transmitting the selected signal,

a second multiplexer for receiving imaginary error and '0' of the errors of general data applied from the second error calculator, selecting '0' while in training sequence period and selecting imaginary error while not in training sequence period according to the selection signal received from the error selection part, and transmitting the selected signal,

a third multiplexer for receiving error of training sequence applied from the first error calculator and signal applied from the first multiplexer, selecting error of training sequence while in training sequence period and selecting the signal applied from the first multiplexer while not in training sequence period according to the synchronization signal received from outside, and transmitting the selected signal,

a fourth multiplexer for receiving the signal applied from the second multiplexer and '0', selecting '0' while in training sequence period and selecting the signal applied from the second multiplexer while not in training sequence period according to the synchronization signal received from outside, and transmitting the selected signal,

a multiplier for multiplying a certain constant $\Delta$ to the signals received from the third and fourth multiplexers, and

a filter coefficient calculator for calculating composite filter coefficients using the I signal and the Q signal received from the composite filter part and the signal received from the multiplier.

15. The channel equalizer for a HDTV as claimed in claim 14,
wherein the certain constant is set greater than '0', but smaller than '1'.

16. The channel equalizer for a HDTV as claimed in claim 15,
wherein the certain constant is set greater than $2_{-12}$, but smaller than $2_{-9}$.

# FIG.1
# PRIOR ART

4SYMBOLS

832SYMBOLS

1SEGMENTS

FIRST FIELD SYNCHRONIZATION SIGNAL

313 SEGMENTS

SEGMENT SYNCHRONIZATION SIGNAL

DATA+FEC

1SEGMENT

SECOND FIELD SYNCHRONIZATION SIGNAL

313 SEGMENTS

DATA+FEC

1SEGMENT

# FIG.2
# PRIOR ART

# FIG.3

EP 0 677 952 A2

# FIG.4

# FIG.5

# FIG.6

<u>21</u>

SYNC ─────── | MEMORY | 21-1

Iout ─────── | SLICER | 21-2

(+) 21-3 ──── E_T

# FIG.7

<u>22</u>

Iout ─────┬──── | FIRST MAPPER | 22-1 ──── | PHASE ERROR CALCULATOR | 22-3 ──── E_R

Qout ─────┬──── | SECOND MAPPER | 22-2 ──── E_I

# FIG.8

<u>23</u>

SYNC ─── | MEMORY | 23-1 ── (+) 23-2 ── | ( )² | 23-3 ── | ACCUMULATOR | 23-4 ── | COMPARATOR | 23-5 ── S

Iout ───────────────

SYNC

REF

15

# FIG.9

# FIG.10

# FIG.11

# FIG.12